# EUROPÄISCHE PATENTSCHRIFT

(11) **EP 0 567 775 B1**
(45) Veröffentlichungstag und Bekanntmachung des Hinweises auf die Patenterteilung: **18.10.1995**
(21) Anmeldenummer: 93104854.0
(22) Anmeldetag: 24.03.1993
(51) Int. Cl.: F24F 3/16

(54) **Verfahren zur Aufbereitung von Raumluft für den Humanbereich**
Room air treating process for the human domain
Procédé de traitement de l'air de locaux pour le domaine humain

(30) Priorität: 28.04.1992 DE 4213778
(43) Veröffentlichungstag der Anmeldung: 03.11.1993
(73) Patentinhaber: HumanAir Patentverwertungsgesellschaft mbH, D-45128 Essen (DE)
(72) Erfinder: Detzer, Rüdiger, Dr., W-6305 Buseck (DE)
(74) Vertreter: Andrejewski, Walter

(56) Entgegenhaltungen:
- EP-A- 0 431 648
- US-A- 4 343 765

## Beschreibung

Die Erfindung betrifft ein Verfahren zur Aufbereitung von Raumluft für den Humanbereich, insbesondere für Wohn- und Arbeitsräume, wobei die aufzubereitende Raumluft physikalisch und/oder chemisch abscheidbare Schadstoffe aufweist oder aufweisen kann, wobei die Raumluft klimatisch in einem Klimazentralgerät aufbereitet wird, wobei die klimatisch aufbereitete Raumluft von einem Gebläse im Bereich des Klimazentralgeräts gefördert wird, wobei die Raumluft in zumindest einem Oxidator mit in einem Ozonisator erzeugtem Ozon behandelt wird zur Oxidation oxidierbarer Schadstoffe, wobei die vom Oxidator kommende Raumluft in zumindest einer Filtereinrichtung mit Wandlerfilter zur Umwandlung von Ozon in stabilen molekularen Stauerstoff behandelt wird, wobei die von der Filtereinrichtung, kommende Raumluft mit zumindest einem Ozon-Sensor auf Ozon analysiert wird, wobei das im Ozonisator erzeugte Ozon mengenmäßig nach Maßgabe elektrischer Signale vom Ozon-Sensor gesteuert und/oder geregelt wird und wobei die aufbereitete Raumluft durch zumindest einen Auslaßkanal mit Luftauslaß in den zugeordneten zu klimatisierenden Raum ausgelassen wird. - Humanbereich bezeichnet im Rahmen der Erfindung für Menschen bestimmte Aufenthaltsräume aller Art, wie Büroräume, Wohnräume, Räume von Theatern und Räume in Kaufhäusern, in Krankenhäusern und dergleichen. Der Begriff Schadstoffe umfaßt einerseits gesundheitsbedenkliche organische und anorganische chemische Verbindungen und andererseits lebende Mikroorganismen wie beispielsweise Bakterien, Pilze und Viren. Der Begriff klimatisch Aufbereiten von Raumluft umfaßt im Rahmen der Erfindung sowohl die Vollklimatisierung als auch die Teilklimatisierung. Bei der Vollklimatisierung werden alle vier thermodynamischen Luftbehandlungsfunktionen, nämlich Heizen, Kühlen, Befeuchten und Entfeuchten durchgeführt, mit den entsprechenden regeltechnischen Maßnahmen. Beim Teilklimatisieren sind die Luftbehandlungsfunktionen demgegenüber reduziert im Extremfall auf bloße Kühlung. Entsprechend reduziert ist der regeltechnische Aufwand. Reines Ozon ist zwar instabil, zerfällt aber bei Raumtemperatur nur verhältnismäßig langsam. Bei. 20° C kann die Halbwertszeit der Ozonkonzentration bei homogener Zerfallsreaktion in einem Gas mehrere Tage betragen. An bestimmten Stoffen, wie sie in den Filtern der Filtereinrichtung, insbesondere für die Sorption, einsetzbar und auch üblich sind, findet jedoch eine sehr spontane Umwandlung des instabilen Ozons in unschädlichen und eher erwünschten stabilen molekularen Sauerstoff im Wege der heterogenen Reaktion statt. Solche Filter werden im Rahmen der Erfindung als Wandlerfilter bezeichnet. Die Wirksamkeit des Wandlerfilters wird mittels eines Ozon-Sensors überwacht. Wenn aufgrund unzureichender Wirkung des Wandlerfilters, beispielsweise nach Alterung oder Vergiftung, ein Durchbruch von Ozon durch den Wandlerfilter erfolgt, ist dieser Ozon-Durchbruch mit Hilfe des Ozon-Sensors meß- und erfaßbar. Mit Hilfe geeigneter Regel- und/oder Steuerungsmaßnahmen ist in diesem Fall die Ozon-Produktionsrate im Ozonisator soweit reduzierbar, daß im Bereich des Ozon-Sensors keine gesundheitsbedenklichen Ozonmengen gemessen werden. Im einfachsten Fall schaltet der Ozon-Sensor den Ozonisator ab, wenn eine Ozon-Konzentration gemessen wird, welche einen vorgegebenen Schwellwert überschreitet.

Ein Verfahren der eingangs genannten Art ist bekannt aus der EP-Patentanmeldung mit der Publikationsnummer 0 431 648 A1. Im Rahmen dieses bekannten Verfahrens werden zwei Ozon-Sensoren eingesetzt. Der erste Ozon-Sensor erfaßt den Ozon-Gehalt der Raumluft vor der Behandlung. Der zweite Ozon-Sensor erfaßt den Ozongehalt der behandelten Luft hinter den katalytisch wirkenden Wandlerfilter. Der Ozonisator wird nach Maßgabe elektrischer Impulse von diesen beiden Ozon-Sensoren gesteuert, wobei der Ozonisator herabgeregelt oder ganz abgeschaltet wird, wenn der zweite Ozon-Sensor eine Ozon-Konzentration über einem vorgegebenen, gesundheitsbedenklichen Schwellwert mißt. Das insofern bekannte Verfahren weist mehrere Nachteile auf, welche im Ergebnis die Gefahr eines unzulässig hohen Ozon-Gehalts in der aufbereiteten Raumluft beinhalten. Als unzulässig hohe und gesundheitsbedenkliche Ozon-Konzentration in Raumluft wird derzeit ein Ozon-Gehalt von 0,1 ppm angesehen (MAK-Wert). Ein Nachteil des bekannten Verfahrens ist, daß die im Ozonisator produzierte Ozonmenge nicht der Maßgabe des Gehaltes oxidierbarer Schadstoffe in der Raumluft folgt. Die Ozon-Produktionsrate muß sich daher an einem maximal erwarteten Gehalt an oxidierbaren Schadstoffen orientieren und ist daher im praktischen Betrieb stets zu hoch. Dies führt zu einer nicht unbeträchtlichen Belastung des Wandlerfilters und zu der erhöhten Gefahr von Ozon-Durchbrüchen durch den Wandlerfilter. Ein weiterer Nachteil ist, daß insbesondere für den zweiten Ozon-Sensor keine Maßnahmen vorgesehen sind, die den Ozon-Sensor kontinuierlich oder in periodischen Zeitintervallen einer Funktionskontrolle unterziehen. Dies bedeutet, daß im Falle eines Defekts beim zweiten Ozon-Sensor und beim Durchbruch von Ozon durch den Wandlerfilter eine unzulässig hohe Ozon-Konzentration in der behandelten Raumluft nicht feststellbar bzw. meßbar ist und somit die erforderliche Abschaltung des Ozonisators zur Vermeidung gesundheitlicher Risiken unterbleibt.

Der Erfindung liegt die Aufgabe zugrunde, ein Verfahren der eingangs beschriebenen Art so weiter auszubilden, daß einerseits oxidierbare Schadstoffe und insbesondere Viren, Bakterien und Pilze wirksam abgeschieden werden können und andererseits, daß die Gefahr unzulässig hoher Ozon-Konzentrationen in der behandelten Raumluft praktisch ausgeschlossen ist. Wirksam bedeutet in bezug auf die Viren, Bakterien oder Pilze, daß diese ihren Charakter als Schadstoffe verlieren, also abgetötet werden. Ferner soll eine Klima-Anlage angegeben werden welche zur Durchführung des erfindungsgemäßen Verfahrens geeignet ist.

Zur Lösung dieser Aufgabe lehrt die Erfindung, daß die Raumluft vor der Behandlung im Oxidator mit zumindest einem Schadstoff-Sensor quantitativ auf oxidierbare Schadstoffe analysiert wird, daß das im Ozonisator erzeugte Ozon mengenmäßig zusätzlich nach Maßgabe elektrischer Signale vom Schadstoff-Sensor gesteuert und/oder geregelt wird, daß die von der Filtereinrichtung kommende Raumluft vor der Analyse mit dem Ozon-Sensor mittels eines Selbsttest-Ozonisators mit Ozon-Konzentrationsimpulsen beaufschlagt wird mit der Maßgabe, daß einerseits vom Selbsttest-Ozonisator eine ausreichende Menge Ozon pro Ozon-Konzentrationsimpuls erzeugt wird zur sicheren Erzeugung von elektrischen Selbsttest-Signalen in einem intakten Ozon-Sensor und andererseits die Amplitude der Ozon-Konzentrationsimpulse bis zum Auslassen der Raumluft in den zu klimatisierenden Raum durch Vermischung und Verdünnung auf einem gesundheitlich unbedenklichen Konzentrationswert gesenkt wird, und daß der Ozonisator bei Ausbleiben elektrischer Selbsttest-Signale vom Ozon-Sensor in einen Bereitschaftszustand gesteuert wird. - Quantitative Analyse mit einem Schadstoff-Sensor meint, daß die Konzentrationen bestimmter vorgegebener Schadstoffe bzw. Schadstoffgruppen meßtechnisch erfaßt und in elektrische Signale umgewandelt werden. Dabei kann die Übertragungsfunktion stetig oder mit diskreten Stufen, auch mit wenigen diskreten Stufen, ausgebildet sein. Ein Selbsttest-Ozonisator kann von grundsätzlich gleichem Aufbau wie herkömmliche Ozonisatoren sein. Die Dimensionierung ist jedoch auf vergleichsweise niedrige Ozon-Produktionsraten ausgelegt. Ozon-Konzentrationsimpulse ergeben sich aufgrund der kontinuierlichen Strömung der Raumluft bei kurzzeitiger Einschaltung des Selbsttest-Ozonisators. An einem bestimmten Ort, beispielsweise beim Ozon-Sensor, sind somit Ozon-Konzentrations/Zeit-Funktionen mit impulsartigem Charakter feststellbar. Das Integral der Ozon-Konzentration über die Zeit ist ein Maß für die vom Selbsttest-Ozonisator erzeugte Ozon-Menge. Jeder Ozon-Sensor hat eine sensorspezifische Empfindlichkeitsgrenze, d. h., daß eine bestimmte Mindestmenge Ozon zur Erzeugung eines signifikanten elektrischen Signals erforderlich ist. Diese muß überschritten werden um ein Selbsttest-Signal sicher zu erzeugen. Es versteht sich, daß der mit dem Selbsttest-Ozonisator erzeugte Ozon-Konzentrationsimpuls andererseits keine zu hohe Amplitude aufweisen darf, da unzulässig hohe Ozon-Konzentrationen gesundheitsschädlich sein können. Ozon-Konzentrationsimpulse können gedämpft werden beispielsweise durch Vermischung und Verdünnung mit ozonfreier Zusatz-Luft. Eine ausreichende Vermischung und Verdünnung auf einen gesundheitlich unbedenklichen Konzentrationswert kann aber durch die Einrichtung eines ausreichend langen Auslaßkanals bewirkt werden. Der Bereitschaftszustand eines Ozonisators besteht in einer Einstellung mit vergleichsweise niedriger Ozon-Produktionsrate. Im Bereitschaftszustand kann die Ozon-Produktionsrate auch null betragen.

Die Erfindung geht von der Erkenntnis aus, daß eine besonders sichere und zuverlässige Aufbereitung von Raumluft für den Humanbereich mit Ozon möglich ist, wenn einerseits eine Analyse auf oxidierbare Schadstoffe vor der Behandlung im Oxidator und eine entsprechende Steuerung des Ozonisators stattfindet und andererseits eine regelmäßige Funktionskontrolle des Ozon-Sensors durchgeführt wird. Ersteres gewährleistet, daß kein unnötiger Überschuß von, Ozon zur Oxidation der Schadstoffe überhaupt produziert wird und letzteres stellt sicher, daß bei einem insofern unerwarteten Ozon-Durchbruch durch den relativ wenig belasteten Wandlerfilter bei gleichzeitigem Ausfall des Ozon-Sensors keine gesundheitlich bedenklichen Ozon-Konzentrationen auftreten können. Insofern erreicht das erfindungsgemäße Verfahren nicht nur eine Abscheidung oxidierbarer Schadstoffe mit besonderer Wirksamkeit, sondern es stellt auch erstmals sicher, daß eine gesundheitlich bedenkliche Belastung mit Ozon praktisch auszuschließen ist.

In einer vorteilhaften Ausführungsform des erfindungsgemäßen Verfahrens erfolgt die klimatische Aufbereitung der Raumluft vor der Behandlung in dem Oxidator. Auf diese Weise ist sichergestellt, daß Bakterien, Pilze und Viren, welche möglicherweise in Wärmetauschern des Klimazentralgerätes angereichert und in die aufzubereitende Raumluft freigesetzt werden, zuverlässig abgetötet werden. Eine besonders effektive Aufbereitung der Raumluft bei vergleichsweise geringem Ozonbedarf wird eingerichtet, wenn die Raumluft in der Filtereinrichtung in zumindest einem Schwebstofffilter und/oder in zumindest einem Sorptionsfilter behandelt wird.

Eine besonders wirksame Dämpfung der Amplitude der Ozon-Konzentrationsimpulse durch Vermischung und Verdünnung ist einrichtbar, wenn die Raumluft im Bereich des Auslaßkanals in einem Diffusor verwirbelt wird. Hierbei ist vorteilhafterweise auch einrichtbar, daß Dichtewellen der Raumluft in dem Diffusor gestreut werden. Insofern ist eine Dämpfung der Amplitude der Ozon-Konzentrationsimpulse auf ein praktisch nicht mehr nachweisbares Niveau in Verbindung mit einer Geräuschdämpfung einrichtbar.

Eine regelungstechnisch besonders einfache aber dennoch wirksame Ausführungsform des erfindungsgemäßen Verfahrens ist dadurch gekennzeichnet, daß die Steuerung und/oder Regelung des Ozonisators nach Maßgabe elektrischer Signale vom Ozon-Sensor für die Dauer der vom Selbsttest-Ozonisator erzeugten Ozon-Konzentrationsimpulse inaktiviert wird. Hierdurch ist ein im Oxidator störendes Ozon-"Loch" in der strömenden Raumluft vermeidbar.

Die Erfindung betrifft auch eine Klima-Anlage für den Humanbereich, insbesondere für Wohn- und Arbeitsräume, welche zur Durchführung des erfindungsgemäßen Verfahrens geeignet ist, wobei die aufzubereitende Raumluft physikalisch und/oder chemisch abscheidbare Schadstoffe sowie oxidierbare Schadstoffe aufweist oder aufweisen kann, mit Klimazentralgerät für die klimatische Raumluftaufbereitung, mit Gebläse im Bereich des Klimazentralgerätes für die Förderung der klimatisch aufbereiteten Raumluft, mit zumindest einem Oxidator für die Oxidation oxidierbarer Schadstoffe mit zugeordnetem Ozonisator, mit zumindest einer Filtereinrichtung mit Wandlerfilter zur Umwandlung des Ozons in der vom Oxidator kommenden Raumluft in stabilen molekularen Sauerstoff, mit zumindest einem Ozon-Sensor zur Analyse der von der Filtereinrichtung kommenden Raumluft auf Ozon, mit zumindest einer Steuer- und/oder Regelvorrichtung zur mengenmäßigen Regelung des im Ozonisator erzeugten Ozons nach Maßgabe elektrischer Signale vom Ozon-Sensor und mit zumindest einem Auslaßkanal mit Luftauslaß zum Auslassen der aufbereiteten Raumluft in den zugeordneten zu klimatisierenden Raum. Die erfindungsgemäße Klima-Anlage ist dadurch gekennzeichnet, daß zumindest ein Schadstoff-Sensor zur quantitativen Analyse oxidierbarer Schadstoffe in der zum Oxidator hinströmenden Raumluft eingerichtet ist, daß zwischen Filtereinrichtung und Ozon-Sensor ein Selbsttest-Ozonisator zur Erzeugung von Ozon-Konzentrationsimpulsen für den Selbsttest des Ozon-Sensors eingerichtet ist, und daß die Steuer- und/oder Regelvorrichtung zusätzlich zur Verarbeitung elektrischer Signale vom Schadstoff-Sensor und von elektrischen Selbsttest-Signalen vom Ozon-Sensor eingerichtet ist sowie mit dem Selbsttest-Ozonisator zu dessen Steuerung und/oder Regelung verbunden ist.

In einem bevorzugten Ausführungsbeispiel der erfindungsgemäßen Klima-Anlage weist der Schadstoff-Sensor zumindest einen Zinnoxid-Sensorsektor auf. Zinnoxid-Sensorsektoren gehören zu der Gruppe der Gas-Sensoren auf Halbleiterbasis. Bei diesen Sensoren wird die Leitfähigkeit eines Halbleitermaterials in Abhängigkeit von dem Bedeckungsgrad einer auf der Halbleiteroberfläche adsorbierten Gasspezies gemessen und ausgewertet. Wenn verschiedene Schadstoffe bzw. Schadstoffgruppen zu bestimmen sind und eine besondere Selektivität der elektrischen Signale bezüglich der vorliegenden Schadstoffe erwünscht ist, ist es vorteilhaft, wenn der Schadstoff-Sensor eine Mehrzahl von Sensorsektoren mit verschiedenen Halbleiteroberflächen aufweist zur quantitativen Analyse verschiedener Schadstoffgruppen und wenn der Schadstoff-Sensor bezüglich der Sensorsektoren individualisierbare elektrische Anschlüsse aufweist. Mit Hilfe der verschiedenen Halbleiteroberflächen, welche verschiedene Selektivitätsbereiche aufweisen, können Querempfindlichkeiten oder teilüberlappende Selektivitätsbereiche auf elektronischem Wege kompensiert werden.

In einem weiteren Ausführungsbeispiel ist der Schadstoff-Sensor mit zumindest einem vom Gasraum abgetrennten und/oder abtrennbaren Referenz-Sensorsektor ausgerüstet. Hierdurch lassen sich die Schadstoff-Konzentrationen mit besonders hoher Genauigkeit bestimmen.

Der Ozon-Sensor kann bevorzugt alternativ einen UV-Absorptions-Sensorsektor, einen Chemolumineszenz-Sensorsektor oder zumindest einen Sensorsektor mit Halbleiteroberfläche, vorzugsweise mit Phthalocyanin als Halbleiter, aufweisen. Gas-Sensoren mit einer Adsorptivschicht aus Phthalocyanin, einem organischen Halbleiter, sind seit längerem bekannt. Eine besonders empfindliche Ausführungsform eines Phthalocyanin-Sensors, welcher auch empfindlich auf Ozon reagiert, ist beispielsweise in der Literaturstelle DE-OS 38 36 819 beschrieben.

In einer weiterhin bevorzugten Ausführungsform der erfindungsgemäßen Klima-Anlage ist der Ozon-Sensor mit zumindest einem vom Gasraum abgetrennten und/oder abtrennbaren Referenz-Sensorsektor ausgestattet. Insbesondere bei dem Einsatz von Ozon-Sensoren mit Halbleiteroberfläche wird somit aufgrund der ständigen Überprüfung der Gleichlaufeigenschaften eine besonders hohe Sicherheit gewährleistet. Fehlfunktionen des Ozon-Sensors sind frühzeitig beispielsweise anhand unzulässiger "Drift", jedenfalls vor dem Totalausfall erkennbar.

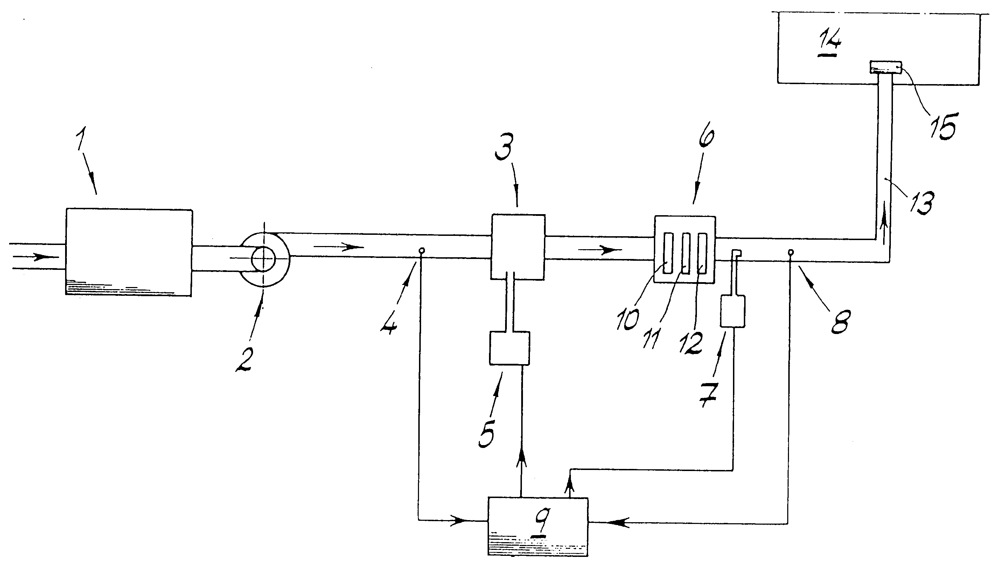

Das erfindungsgemäße Verfahren zur Aufbereitung von Raumluft für den Humanbereich wird im folgenden anhand einer lediglich ein Ausführungsbeispiel darstellenden erfindungsgemäßen Klima-Anlage erläutert. Es zeigt die einzige Figur
eine erfindungsgemäße Klima-Anlage für den Humanbereich.

Die aufzubereitende Raumluft, welche physikalisch und/oder chemisch abscheidbare Schadstoffe sowie oxidierbare Schadstoffe aufweist, wird in einem Klimazentralgerät 1 klimatisch aufbereitet. Dabei erfolgt in je nach klimatischen Umgebungsbedingungen eine Kühlung oder eine Erwärmung der Raumluft sowie eine Befeuchtung oder Entfeuchtung der Raumluft. Die klimatisch aufbereitete Raumluft wird mit einem Gebläse 2 im Bereich des Klimazentralgerätes in Richtung eines Oxidators 3 gefördert. Dabei strömt die klimatisch aufbereitete Raumluft an einem Schadstoff-Sensor 4 zur quantitativen Analyse oxidierbarer Schadstoffe vorbei. Im Ausführungsbeispiel handelt es sich bei dem Schadstoff-Sensor 4 um einen Zinnoxid-Sensor. In dem Oxidator 3 wird die klimatisch aufbereitete Raumluft mit Ozon aus einem zugeordneten Ozonisator 5 vermischt, wobei die Oxidation oxidierbarer Schadstoffe eingeleitet wird. In der folgenden Filtereinrichtung 6 mit Schwebstoffilter 10, Sorptionsfilter 11 und Wandlerfilter 12 werden einerseits die Schadstoffe physikalisch bzw. chemisch abgeschieden und andererseits wird überschüssiges Ozon in der vom Oxidator 3 kommenden Raumluft in stabilen molekularen Sauerstoff umgewandelt. Die den Wandlerfilter 12 verlassende Raumluft wird mit Hilfe eines Selbsttest-Ozonisators 7 mit Ozon-Konzentrationsimpulsen beaufschlagt. Die mit den Konzentrations-Impulsen beaufschlagte aufbereitete Raumluft wird schließlich an einem Ozon-Sensor 8, welcher im Ausführungsbeispiel als UV-Absorptions-Sensor ausgeführt ist, vorbeigeführt. Solche UV-Absorptions-Sensoren sind sehr kompakt ausführbar und zeichnen sich durch eine außerordentlich hohe Empfindlichkeit, Betriebssicherheit und insbesondere Selektivität aus. Im Ausführungsbeispiel ist weiterhin eine Steuer- und/oder Regelvorrichtung 9 vorgesehen. Eingangsgrößen der Steuer- und/oder Regelvorrichtung 9 sind die elektrischen Signale vom Schadstoff-Sensor 4 und vom Ozon-Sensor 8. Ausgangsgrößen der Steuer- und/oder Regelvorrichtung 9 sind elektrische Signale zur Steuerung des Ozonisators 5 sowie des Selbsttest-Ozonisators 7. Der Ozonisator 5 wird mit den Maßgaben gesteuert, daß einerseits eine Ozonmenge erzeugt wird, welche der vom Schadstoff-Sensor 4 erfaßten Schadstoffmenge entspricht und andererseits eine gegebenenfalls dem Wandlerfilter 6 entströmende überschüssige Ozonmenge einen vorgewählten Grenzwert nicht überschreitet. Der Selbsttest-Ozonisator 7 wird betrieben mit den Maßgaben, daß einerseits eine ausreichende Menge Ozon bei jedem Ozon-Konzentrationsimpuls erzeugt wird zur sicheren Erzeugung von elektrischen Selbsttest-Signalen in einem intakten Ozon-Sensor 8 und andererseits die Amplitude der Ozon-Konzentrationsimpulse bis zum Auslassen der Raumluft in den zu klimatisierenden Raum durch Vermischung und Verdünnung auf einen gesundheitlich unbedenklichen Konzentrationswert gesenkt wird. Während der Dauer eines Ozon-Konzentrationsimpulses vom Selbsttest-Ozonisator 7 wird dabei die Steuerung des Ozonisators 5 nach Maßgabe der elektrischen Signale vom Ozon-Sensor 8 inaktiviert. Falls während der Ozon-Konzentrationsimpulse vom Selbsttest-Ozonisator 7 elektrische Selbsttest-Signale vom Ozon-Sensor 8 ausbleiben, wird der Ozonisator von der Steuer- und/oder Regelvorrichtung 9 in den Bereitschaftszustand gesteuert, in welchem dann eine lediglich geringe Menge, jedenfalls gesundheitlich unbedenkliche Menge Ozon erzeugt wird. Die aufbereitete Raumluft wird durch einen Anstoßkanal 13 in den zu klimatisierenden Raum 14 über einen Luftauslaß mit Diffusor 15 ausgelassen.

## Patentansprüche

1. Verfahren zur Aufbereitung von Raumluft für den Humanbereich, insbesondere für Wohn- und Arbeitsräume,
wobei die aufzubereitende Raumluft physikalisch und/oder chemisch abscheidbare Schadstoffe aufweist oder aufweisen kann,
wobei die Raumluft klimatisch in einem Klimazentralgerät (1) aufbereitet wird,
wobei die klimatisch aufbereitete Raumluft von einem Gebläse (2) im Bereich des Klimazentralgeräts (1) gefördert wird,
wobei die Raumluft in zumindest einem Oxidator (3) mit in einem Ozonisator (5) erzeugtem Ozon behandelt wird zur Oxidation oxidierbarer Schadstoffe,
wobei die vom Oxidator (3) kommende Raumluft in zumindest einer Filtereinrichtung (6) mit Wandlerfilter (12) zur Umwandlung von Ozon in stabilen molekularen Sauerstoff behandelt wird,
wobei die von der Filtereinrichtung (6) kommende Raumluft mit zumindest einem Ozon-Sensor (8) auf Ozon analysiert wird,
wobei das im Ozonisator (5) erzeugte Ozon mengenmäßig nach Maßgabe elektrischer Signale vorn Ozon-Sensor (8) gesteuert und/oder geregelt wird und
wobei die aufbereitete Raumluft durch zumindest einen Auslaßkanal (13) mit Luftauslaß (15) in den zugeordneten zu klimatisierenden Raum ausgelassen wird,
**dadurch gekennzeichnet,**
daß die Raumluft vor der Behandlung im Oxidator (3) mit zumindest einem Schadstoff-Sensor (4) quantitativ auf oxidierbare Schadstoffe analysiert wird,
daß das im Ozonisator (5) erzeugte Ozon mengenmäßig zusätzlich nach Maßgabe elektrischer Signale vom Schadstoff-Sensor (4) gesteuert und/oder geregelt wird,
daß die von der Filtereinrichtung (6) kommende Raumluft vor der Analyse mit dem Ozon-Sensor (8) mittels eines Selbsttest-Ozonisators (7) mit Ozon-Konzentrationsimpulsen beaufschlagt wird mit der Maßgabe,
daß einerseits vom Selbsttest-Ozonisator (7) eine ausreichende Menge Ozon pro Ozon-Konzentrationsimpuls erzeugt wird zur sicheren Erzeugung von elektrischen Selbsttest-Signalen in einem intakten Ozon-Sensor (8) und andererseits die Amplitude der Ozon-Konzentrationsimpulse bis zum Auslassen der Raumluft in den zu klimatisierenden Raum (14) durch Vermischung und Verdünnung auf einen gesundheitlich unbedenklichen Konzentrationswert gesenkt wird und
daß der Ozonisator (5) bei Ausbleiben elektrischer Selbsttest-Signale vom Ozon-Sensor (8) in einen Bereitschaftszustand gesteuert wird.

2. Verfahren nach Anspruch 1, dadurch gekennzeichnet, daß die klimatische Aufbereitung der Raumluft vor der Behandlung in dem Oxidator (3) erfolgt.

3. Verfahren nach Anspruch 1 oder 2, dadurch gekennzeichnet, daß die Raumluft in der Filtereinrichtung (6) in zumindest einem Schwebstoffilter (10) behandelt wird.

4. Verfahren nach einem der Ansprüche 1 bis 3, dadurch gekennzeichnet, daß die Raumluft in der Filtereinrichtung (6) in zumindest einem Sorptionsfilter (11) behandelt wird.

5. Verfahren nach einem der Ansprüche 1 bis 4, dadurch gekennzeichnet, daß die Raumluft im Bereich des Auslaßkanals (13) in einem Diffusor (15) verwirbelt wird.

6. Verfahren nach einem der Ansprüche 1 bis 5, dadurch gekennzeichnet, daß Dichteweilen der Raumluft in dem Diffusor (15) gestreut werden.

7. Verfahren nach einem der Ansprüche 1 bis 6, dadurch gekennzeichnet, daß die Steuerung und/oder Regelung des Ozonisators (5) nach Maßgabe elektrischer Signale vom Ozon-Sensor (8) für die Dauer der vom Selbsttest-Ozonisator (7) erzeugten Ozon-Konzentrationsimpulse inaktiviert wird.

8. Klima-Anlage für den Humanbereich, insbesondere für Wohn- und Arbeitsräume,
wobei die aufzubereitende Raumluft physikalisch und/oder chemisch abscheidbare Schadstoffe sowie oxidierbare Schadstoffe aufweist oder aufweisen kann,
mit Klimazentralgerät (1) für die klimatische Raumluftaufbereitung,
mit Gebläse (2) im Bereich des Klimazentralgerätes (1) für die Förderung der klimatisch aufbereiteten Raumluft,
mit zumindest einem Oxidator (3) für die Oxidation oxidierbarer Schadstoffe mit zugeordnetem Ozonisator (5),
mit zumindest einer Filtereinrichtung (6) mit Wandlerfilter (12) zur Umwandlung des Ozons in der vom Oxidator (3) kommenden Raumluft in stabilen molekularen Sauerstoff,
mit zumindest einem Ozon-Sensor (8) zur Analyse der von der Filtereinrichtung (6) kommenden Raumluft auf Ozon,
mit zumindest einer Steuer- und/oder Regelvorrichtung (9) zur mengenmäßigen Regelung des im Ozonisator erzeugten Ozons nach Maßgabe elektrischer Signale vom Ozon-Sensor (8) und
mit zumindest einem Auslaßkanal (13) mit Luftauslaß (15) zum Auslassen der aufbereiteten Raumluft in den zugeordneten zu klimatisierenden Raum (14),
**dadurch gekennzeichnet,**
daß zumindest ein Schadstoff-Sensor (4) zur quantitativen Analyse oxidierbare Schadstoffe in der zum Oxidator (3) hinströmenden Raumluft eingerichtet ist,
daß zwischen Filtereinrichtung (6) und Ozon-Sensor (8) ein Selbsttest-Ozonisator (7) zur Erzeugung von Ozon-Konzentrationsimpulsen für den Selbsttest des Ozon-Sensors (8) eingerichtet ist und
daß die Steuer- und/oder Regelvorrichtung (9) zusätzlich zur Verarbeitung elektrischer Signale vom Schadstoff-Sensor (4) und von elektrischen Selbsttest-Signalen vom Ozon-Sensor (8) eingerichtet ist sowie mit dem Selbsttest-Ozonisator (7) zu dessen Steuerung und/oder Regelung verbunden ist.

9. Klima-Anlage nach Anspruch 8, dadurch gekennzeichnet, daß der Schadstoff-Sensor (4) zumindest einen Zinnoxid-Sensorsektor aufweist.

10. Klima-Anlage nach Anspruch 8 oder 9, dadurch gekennzeichnet, daß der Schadstoff-Sensor (4) eine Mehrzahl von Sensorsektoren mit verschiedenen Halbleiteroberflächen aufweist zur quantitativen Analyse verschiedener Schadstoff-Gruppen und daß der Schadstoff-Sensor (4) bezüglich der Sensorsektoren individualisierbare elektrische Anschlüsse aufweist.

11. Klima-Anlage nach einem der Ansprüche 8 bis 10, dadurch gekennzeichnet, daß der Schadstoff-Sensor (4) zumindest einen vom Gasraum abgetrennten und/oder abtrennbaren Referenz-Sensorsektor aufweist.

12. Klima-Anlage nach einem der Ansprüche 8 bis 11, dadurch gekennzeichnet, daß der Ozon-Sensor (8) einen UV-Absorptions-Sensorsektor aufweist.

13. Klima-Anlage nach einem der Ansprüche 8 bis 11, dadurch gekennzeichnet, daß der Ozon-Sensor (8) einen Chemolumineszenz-Sensorsektor aufweist.

14. Klima-Anlage nach einem der Ansprüche 8 bis 11, dadurch gekennzeichnet, daß der Ozon-Sensor (8) zumindest einen Sensorsektor mit einer Halbleiteroberfläche, vorzugsweise mit Phthalocyanin als Halbleiter, aufweist.

15. Klima-Anlage nach einem der Ansprüche 8 bis 14, dadurch gekennzeichnet, daß der Ozon-Sensor (8) zumindest einen vom Gasraum abgetrennten und/oder abtrennbaren Referenz-Sensorsektor aufweist.

## Claims

1. A process for conditioning ventilation air for the human domain, particularly for living and working spaces,
wherein the ventilation air to be conditioned comprises or may comprise pollutants which can be separated physically or chemically,
wherein the ventilation air is air-conditioned in a central air conditioning unit (1),
wherein the air-conditioned ventilation air is supplied by a fan (2) in the region of the central air conditioning unit (1),
wherein the ventilation air is treated in at least one oxidiser (3) with ozone produced in an ozoniser (5) for the oxidation of oxidisable pollutants,
wherein the ventilation air coming from the oxidiser (3) is treated in at least one filter device (6) having a conversion filter (12) for converting ozone into stable molecular oxygen,
wherein the ventilation air coming from the filter device (6) is analysed for ozone by at least one ozone sensor (8),
wherein the ozone produced in the ozoniser (5) is quantitatively controlled and/or regulated in accordance with electrical signals from the ozone sensor (8), and
wherein the conditioned ventilation air is discharged through at least one outlet duct (13) having an air outlet (15) into the associated space to be air-conditioned,
characterised in that
before it is treated in the oxidiser (3) the ventilation air is quantitatively analysed for oxidisable pollutants by at least one pollutant sensor (4),
that the ozone produced in the ozoniser (5) is additionally quantitatively controlled and/or regulated in accordance with electrical signals from the pollutant sensor (4),
that the ventilation air coming from the filter device (6) is acted upon by ozone concentration pulses by means of a self-test ozoniser (7) before its analysis by the ozone sensor (8), with the proviso
firstly that a sufficient amount of ozone for each ozone concentration pulse is produced by the self-test ozoniser (7), in order reliably to generate electrical self-test signals in an intact ozone sensor (8), and secondly that up to the discharge of the ventilation air into the space (14) to be air-conditioned the amplitude of the ozone concentration pulses is decreased by mixing and dilution to a concentration which is harmless to health, and
that the ozoniser (5) is directed into a standby condition in the absence of electrical self-test signals from the ozone sensor (8).

2. A process according to claim 1, characterised in that the air-conditioning of the ventilation air is effected before its treatment in the oxidiser (3).

3. A process according to claim 1 or 2, characterised in that the ventilation air is treated in at least one airborne particulate filter (10) in the filter device (6).

4. A process according to any one of claims 1 to 3, characterised in that the ventilation air is treated in at least one sorption filter (11) in the filter device (6).

5. A process according to any one of claims 1 to 4, characterised in that the ventilation air is swirled in a diffuser (15) in the region of the outlet duct (13).

6. A process according to any one of claims 1 to 5, characterised in that density waves in the ventilation air are dispersed in the diffuser (15).

7. A process according to any one of claims 1 to 6, characterised in that control and/or regulation of the ozoniser (5) is deactivated for the duration of the ozone concentration pulses generated by the self-test ozoniser (7) in accordance with electrical signals from the ozone sensor (8).

8. An air-conditioning installation for the human domain, particularly for living and working spaces,
wherein the ventilation air to be conditioned comprises or may comprise pollutants which can be separated physically or chemically,
having a central air conditioning unit (1) for the air-conditioning of the ventilation air,
having a fan (2) in the region of the central air conditioning unit (1) for supplying the air-conditioned ventilation air,
having at least one oxidiser (3) for the oxidation of oxidisable pollutants, with an associated ozoniser (5),
having at least one filter device (6) with a conversion filter (12) for converting ozone in the ventilation air coming from the oxidiser (3) into stable molecular oxygen,
having at least one ozone sensor (8) for analysing the ventilation air coming from the filter device (6) for ozone,
having at least one control and/or regulating device (9) for quantitatively regulating the ozone produced in the ozoniser in accordance with electrical signals from the ozone sensor (8), and
having at least one outlet duct (13) having an air outlet (15) for the discharge of the conditioned ventilation air into the associated space (14) to be air-conditioned,
characterised in that
at least one pollutant sensor (4) is provided for the quantitative analysis of oxidisable pollutants in the ventilation air flowing towards the oxidiser (3),
that a self-test ozoniser (7) for the generation of ozone concentration pulses for the self-test of the ozone sensor (8) is disposed between the filter device (6) and the ozone sensor (8), and
that the control and/or regulating device (9) is designed in addition for the processing of electrical signals from the pollutant sensor (4) and of electrical self-test signals from the ozone sensor (8), and is connected to the self-test ozoniser (7) for controlling and/or regulating the latter.

9. An air-conditioning installation according to claim 8, characterised in that the pollutant sensor (4) comprises at least one tin oxide sensor sector.

10. An air-conditioning installation according to claim 8 or 9, characterised in that the pollutant sensor (4) comprises a plurality of sensor sectors with different semiconductor surfaces for the quantitative analysis of different pollutant groups, and that the pollutant sensor (4) has electrical connections which can be individualised with respect to the sensor sectors.

11. An air-conditioning installation according to any one of claims 8 to 10, characterised in that the pollutant sensor (4) comprises at least one reference sensor sector which is separated and/or separable from the gas space.

12. An air-conditioning installation according to any one of claims 8 to 11, characterised in that the ozone sensor (8) comprises a UV absorption sensor sector.

13. An air-conditioning installation according to any one of claims 8 to 11, characterised in that the ozone sensor (8) comprises a chemiluminescence sensor sector.

14. An air-conditioning installation according to any one of claims 8 to 11, characterised in that the ozone sensor (8) comprises at least one sensor sector having a semiconductor surface, preferably with phthalocyanine as the semiconductor.

15. An air-conditioning installation according to any one of claims 8 to 14, characterised in that the ozone sensor (8) comprises at least one reference sensor sector which is separated and/or separable from the gas space.

## Revendications

1. Procédé dé traitement de l'air ambiant pour le domaine humain, en particulier pour des locaux d'habitation et de travail, l'air ambiant à traiter contenant ou pouvant contenir des éléments polluants extractibles de manière physique et/ou chimique, l'air ambiant étant conditionné dans une centrale de climatisation (1), l'air ambiant climatisé étant refoulé par un ventilateur (2) disposé dans la région de la centrale de climatisation (1), l'air ambiant étant traité dans au moins un oxydateur (3) avec de l'ozone produit dans un ozoniseur (5) pour l'oxydation des éléments polluants oxydables, l'air ambiant venant de l'oxydateur (3) étant traité dans au moins un système de filtration (6) avec filtre convertisseur (12) pour la transformation de l'ozone en oxygène moléculaire stable, la teneur en ozone de l'air ambiant venant du système de filtration (6) étant analysée à l'aide d'au moins un détecteur d'ozone (8), la quantité d'ozone produite dans l'ozoniseur (5) étant commandée et/ou réglée par le détecteur d'ozone (8) en fonction de signaux électriques, et l'air ambiant traité sortant dans le local associé à climatiser par au moins un canal de sortie (13) muni d'une sortie d'air (15), caractérisé en ce que, avant le traitement dans l'oxydateur (3), l'air ambiant est soumis à une analyse quantitative par au moins un détecteur d'élements polluants (4) pour déterminer la teneur en éléments polluants oxydables, que la quantité d'ozone produite dans l'ozoniseur (5) est commandée et/ou réglée en plus par le détecteur d'éléments polluants (4) en fonction de signaux électriques, que, avant l'analyse avec le détecteur d'ozone (8), l'air ambiant venant du système de filtration (6) est soumis à des impulsions de concentration d'ozone délivrées par un ozoniseur d'auto-contrôle (7) de telle sorte que, d'un part, l'ozoniseur d'auto-contrôle (7) produit à chaque impulsion de concentration d'ozone, une quantité d'ozone suffisante pour assurer avec certitude la génération de signaux électriques d'auto-contrôle dans un détecteur d'ozone (8) intact et que d'autre part, l'amplitude des impulsions de concentration d'ozone jusqu'à l'échappement de l'air ambiant dans le local (14) à climatiser est réduite, par mélange et dilution, à une valeur de concentration qui ne présente aucun risque pour la santé, et que, en l'absence de signaux électriques d'auto-contrôle délivrés par le détecteur d'ozone (8), l'ozoniseur (5) est placé dans un état d'attente.

2. Procédé selon la revendication 1, caractérisé en ce que, la climatisation de l'air ambiant est effectuée avant le traitement dans l'oxydateur (3).

3. Procédé selon l'une des revendications 1 ou 2, caractérisé en ce que, dans le système de filtration (6), l'air ambiant est traité dans au moins un filtre (10) pour matières en suspension dans l'air.

4. Procédé selon l'une des revendications 1 à 3, caractérisé en ce que, dans le système de filtration (6), l'air ambiant traverse au moins un filtre à sorption (11).

5. Procédé selon l'une des revendications 1 à 4, caractérisé en ce que, dans la région du canal de sortie (13), l'air ambiant est tourbillonné dans un diffuseur (15).

6. Procédé selon l'une des revendications 1 à 5, caractérisé en ce que, des ondes de densité de l'air ambiant sont dispersées dans le diffuseur (15).

7. Procédé selon l'une des revendications 1 à 6, caractérisé en ce que, la commande et/ou le réglage de l'ozoniseur (5) en fonction de signaux électriques délivrés par le détecteur d'ozone (8) sont inactivés pour la durée des impulsions de concentrations d'ozone produites par l'ozoniseur d'auto-contrôle (7).

8. Installation de conditionnement d'air pour le domaine humain, en particulier pour des locaux d'habitation et de travail, l'air ambiant à traiter contenant ou pouvant contenir des éléments polluants extractibles de manière de manière physique et/ou chimique, comprenant une centrale de climatisation (1) pour la climatisation de l'air ambiant, un ventilateur (2) disposé dans la région de la centrale de climatisation (1) pour le refoulement de l'air ambiant climatisé, au moins un oxydateur (3) pour l'oxydation des éléments polluants oxydables, avec ozoniseur (5) associé, au moins un système de filtration -(6) avec un filtre convertisseur (12) pour la transformation de l'ozone contenu dans l'air ambiant venant de l'oxydateur (3), en oxygène moléculaire stable, au moins un détecteur d'ozone (8) pour l'analyse de l'ozone contenu dans l'air ambiant venant du système de filtration (6), au moins un dispositif de commande et/ou de réglage (9) pour le réglage quantitatif de l'ozone produit dans l'ozoniseur, en fonction de signaux électriques délivrés par le détecteur d'ozone (8), et au moins un canal de sortie (13) avec sortie d'air (15) pour l'échappement de l'air ambiant traité dans le local à climatiser (14) associé, caractérisé en ce qu'elle comprend au moins un détecteur d'élément polluants (4) pour l'analyse quantitative des éléments polluants contenus dans le courant d'air ambiant dirigé vers l'oxydateur (3), qu'entre le système de filtration (6) et le détecteur d'ozone (8) est disposé un ozoniseur d'auto-contrôle (7) pour la production d'impulsions de concentration d'ozone pour l'auto-contrôle du détecteur d'ozone (8), et que le dispositif de commande et/ou de réglage (9) est en plus agencé pour le traitement de signaux électriques fournis par le détecteur d'éléments polluants (4) et de signaux électriques d'auto-contrôle délivrés par le détecteur d'ozone (8), et relié à l'ozoniseur d'auto-contrôle (7) pour la commande et/ou le réglage de celui-ci.

9. Installation de conditionnement d'air selon la revendication 8, caractérisé en ce que, le détecteur d'éléments polluants (4) comprend au moins un secteur de détection d'oxyde d'étain.

10. Installation de conditionnement d'air selon l'une des revendications 8 ou 9, caractérisé en ce que, le détecteur d'éléments polluants (4) comprend une pluralité de secteurs de détection avec différentes surfaces semi-conductrices pour l'analyse quantitative de différents groupes d'élements polluants, et que le détecteur d'éléments polluants (4) comporte des branchements électriques qui peuvent être individualisés pour les secteurs de détection.

11. Installation de conditionnement d'air selon l'une des revendications 8 à 10, caractérisée en ce que, le détecteur d'éléments polluants (4) comprend au moins un secteur de détection de référence séparé et/ou séparable de la chambre de gaz.

12. Installation de conditionnement d'air selon l'une des revendications 8 à 11, caractérisé en ce que, le détecteur d'ozone (8) comprend un secteur de détection à absorption UV.

13. Installation de conditionnement d'air selon l'une des revendications 8 à 11, caractérisée en ce que, le détecteur d'ozone (8) comprend un secteur de détection à chimioluminescence.

14. Installation de conditionnement d'air selon l'une des revendications 8 à 11, caractérisé en ce que, le détecteur d'ozone (8) comprend au moins un secteur de détection avec une surface semi-conductrice, de préférence avec de la phtalocyanine comme semi-conducteur.

15. Installation de conditionnement d'air selon l'une des revendications 8 à 14, caractérisé en ce que, le détecteur d'ozone (8) comprend au moins un secteur de détection de référence séparé et/ou séparable de la chambre de gaz.
